(19) Europäisches Patentamt
European Patent Office
Office européen des brevets

(11) **EP 0 695 279 B1**

(12) **EUROPÄISCHE PATENTSCHRIFT**

(45) Veröffentlichungstag und Bekanntmachung des Hinweises auf die Patenterteilung:
**04.06.1997 Patentblatt 1997/23**

(21) Anmeldenummer: **94914323.4**

(22) Anmeldetag: **20.04.1994**

(51) Int Cl.[6]: **C01B 3/40**, B01J 21/06, B01J 23/56, B01J 23/74

(86) Internationale Anmeldenummer:
**PCT/DE94/00513**

(87) Internationale Veröffentlichungsnummer:
**WO 94/24042 (27.10.1994 Gazette 1994/24)**

(54) **VERWENDUNG EINES KATALYSATORS ZUR HERSTELLUNG VON SYNTHESEGAS**

USE OF A CATALYST FOR PRODUCING SYNTHESIS GAS

UTILISATION D'UN CATALYSEUR POUR LA PRODUCTION DE GAZ DE SYNTHESE

(84) Benannte Vertragsstaaten:
**AT BE CH DE DK ES FR GB GR IE IT LI LU NL PT SE**

(30) Priorität: **22.04.1993 DE 4313673**

(43) Veröffentlichungstag der Anmeldung:
**07.02.1996 Patentblatt 1996/06**

(73) Patentinhaber:
- **MANNESMANN Aktiengesellschaft**
  **40213 Düsseldorf (DE)**
- **K.T.I. Group B.V.**
  **NL-2700 AB Zoetermeer (NL)**

(72) Erfinder:
- **SESHAN, Kulathu-Iyer**
  **NL-7559 AJ Hengelo (NL)**
- **ROSS, Julian Richard H.**
  **Limerick (IE)**
- **MERCERA, Patrick, Dennis, L.**
  **NL-7511 LD Enschede (NL)**
- **XUE, Erzeng**
  **NL-7514 ZW Enschede (NL)**

(74) Vertreter: **Meissner, Peter E., Dipl.-Ing. et al**
**Meissner & Meissner,**
**Patentanwaltsbüro,**
**Hohenzollerndamm 89**
**14199 Berlin (DE)**

(56) Entgegenhaltungen:
**EP-A- 0 033 505**          **EP-A- 0 333 037**
**EP-A- 0 414 573**          **EP-A- 0 495 534**

## Beschreibung

Die Erfindung betrifft die Verwendung eines Katalysators zur Herstellung von Synthesegas in Form von CO und $H_2$ aus $CO_2$ und $CH_4$ undloder anderen leichten Kohlenwasserstoffen.

Die Verbrennung fossiler Brennstoffe in Form von Kohle, Erdöl, Erdgas oder hieraus hergestellten sekundären Brennstoffen, die vornehmlich in den Industriestaaten stattfindet, führt zu einer zunehmenden Anreicherung von $CO_2$ in der Atmosphäre. Da $CO_2$ zu den sogenannten Treibhausgasen gehört, führen bereits relativ geringe Konzentrationserhöhungen zu weltweit sich auswirkenden klimatischen Veränderungen. Es wird bereits eine Erhöhung der mittleren Temperatur in der Atmosphäre beobachtet und für die nächsten Jahre ein weiterer Anstieg erwartet mit der Folge von zunehmend häufiger auftretenden und heftiger werdenden Naturkatastrophen (z.B. Trockenperioden, Überschwemmungen, Sturm). Daher werden verstärkte Bemühungen gefordert, zumindest das Tempo der weiteren Zunahme der $CO_2$-Konzentration zu vermindern. Dies wird in erster Linie zu erreichen versucht durch eine Drosselung des Energieverbrauchs. Für eine entsprechende Beeinflussung ist seitens einiger Staaten beispielsweise an die Einführung einer Energiesteuer gedacht, deren Höhe sich nach der Menge des beim Energieverbrauch freigesetzten $CO_2$ bemißt. Eine andere Möglichkeit, die Freisetzung von $CO_2$ zu vermindern, besteht darin, dieses Gas einer Wiederverwendung zuzuführen, also beispielsweise zur Herstellung anderer Produkte zu nutzen.

In einer Reihe von chemischen Prozessen wird Synthesegas (CO + $H_2$) eingesetzt. Derartiges Synthesegas kann auf unterschiedliche Weise hergestellt werden. Die am meisten benutzte Methode besteht in der Reformierung von Methan. Dies führt zu einem Produkt mit einem $H_2$/CO-Verhältnis von 3 entsprechend der Reaktion:

$$CH_4 + H_2O \rightarrow CO + 3H_2$$

Das $H_2$/CO-Verhältnis kann durch eine Erhöhung des $H_2O$-Einsatzes gegenüber der $CH_4$-Einsatzmenge und durch eine anschließende CO-Shiftreaktion weiter zu noch höheren Werten verschoben werden:

$$CO + H_2O \rightarrow CO_2 + H_2$$

Ein in dieser Weise hergestelltes Synthesegas ist besonders geeignet für die Synthese von Methanol, das wiederum weiter umgewandelt werden kann in andere petrochemische Produkte.

Die teilweise Oxidation von Methan mit Sauerstoff stellt einen anderen Weg zur Synthesegasherstellung dar und zeichnet sich durch ein $H_2$/CO-Verhältnis von 2 aus:

$$CH_4 + 0{,}5\, O_2 \rightarrow CO + 2H_2$$

Ein solches Synthesegas eignet sich in besonderer Weise für die Fischer-Tropsch-Synthese, die ein $H_2$/CO-Verhältnis von etwa 1,7 - 2,5 erfordert.

Die Produktion von Oxoalkoholen ist ein weiteres wichtiges Anwendungsfeld für Synthesegas. Oxoalkohole werden durch Hydroformylierung von $\alpha$- Olefinen hergestellt entsprechend der Reaktion:

$$CH_3\text{-}CH_2\text{-}CH_2\text{-}CH = CH_2 + CO + H_2 \rightarrow CH_3\text{-}CH_2\text{-}CH_2CH_2\text{-}CH_2\text{-}CHO$$

Das Aldehyd wird anschließend hydriert zu dem gewünschten Alkohol. Bei diesem Produktionsverfahren wird ein $H_2$/CO-Verhältnis von etwa 1 benötigt. Eine Möglichkeit, ein solches Synthesegas zu erzeugen, ist durch die Kohlevergasung gegeben.

Eine andere Möglichkeit, ein solches Synthesegas mit einem $H_2$/CO-Verhältnis von 1 herzustellen, stellt die Umsetzung von $CO_2$ mit $CH_4$ dar:

$$CO_2 + CH_4 \rightarrow 2CO + 2H_2$$

Es ist bekannt, diese Umsetzung z.B. bei 500 °C und unter erhöhtem Druck in Anwesenheit eines Katalysators vorzunehmen. Da solche Verfahren bisher keine praktische Bedeutung erlangt haben, finden sich relativ wenige Veröffentlichungen über diese Thematik (z.B. Chem. Eng. Science, 1988, Nr. 11, Seite 3049-3062 und Chem. Eng. Science, 1989, Nr. 12, Seite 2825-2829). Als geeignete Katalysatoren werden die Metalle Ni, Pt, Rh und Pd genannt, wobei diese Elemente jeweils auf einem Trägerwerkstoff aufgebracht sind, der aus $Al_2O_3$ oder $SiO_2$ besteht. Im Laborversuch läßt sich die grundsätzliche Wirksamkeit solcher Katalysatoren leicht nachweisen. Für einen kommerziellen Einsatz sind sie jedoch ungeeignet. Dies liegt an der Tatsache, daß durch die Katalysatorwirkung auch unerwünschte Nebenreaktionen gefördert werden, nämlich:

$$2CO \rightarrow C + CO_2 \qquad \text{(Boudouard-Reaktion)}$$

$$CH_4 \rightarrow C + 2H_2 \qquad \text{(Methan-Cracken)}$$

$$CO + H_2 \rightarrow C + H_2O \qquad \text{(CO-Reduktion)}$$

Diese Nebenreaktionen sind deswegen unerwünscht, weil sie zur .Freisetzung von Kohlenstoff führen, der sich auf dem Katalysator ablagert (Verkokung) und dessen Wirksamkeit immer mehr reduziert (Deaktivierung). Die Verkokung kann zwar durch eine drastische Erhöhung der $CO_2$-Menge über die stöchiometrisch für die eingesetzte $CH_4$-Menge erforderliche Menge hinaus vermindert werden, jeooch ist dies selbstverständlich mit der Notwendigkeit einer Abtrennung großer überschüssiger $CO_2$-Mengen aus dem erzeugten Synthesegas und deren Rückführung in den Prozeß verbunden. Die Wirtschaftlichkeit eines solchen Verfahrens wird durch den hierfür erforderlichen Zusatzaufwand von vornherein in Frage gestellt.

Um die Neigung zur Verkokung zu verringern, ist es bekannt, die Reaktion zwischen $CO_2$ und $CH_4$ in Anwesenheit von Wasserdampf ablaufen zu lassen. Auch dies beeinträchtigt die Wirtschaftlichkeit des Verfahrens, ohne dabei in technischer Hinsicht wirklich befriedigende Ergebnisse zu liefern.

In der DE 41 02 185 A1 wird ein katalytisches System zur Herstellung von Synthesegas durch Reformieren von leichten Kohlenwasserstoffen mit $CO_2$ beschrieben, bei dem als katalytisch wirksamer Beschichtungsstoff ein Metall oder eine Verbindung von Metallen der Platingruppe vorgesehen ist. Als bevorzugte Metalle werden Rhodium, Ruthenium und Iridium genannt. Diese Metalle werden auf einen oxidischen Trägerwerkstoff aufgebracht, der aus der Gruppe Al, Mg, Zr, Si, Ce und/oder La ausgewählt sein soll. Die Ausführungsbeispiele beschränken sich auf die beiden Trägerwerkstoffe $MgO_2$ und $Al_2O_3$. Vor der Aufbringung des Beschichtungsmaterials auf den Trägerwerkstoff wird dieser in einer Vorbehandlung verkieselt. Bei der Aufbringung des Beschichtungswerkstoffs selbst findet eine chemische Umsetzung der Einsatzmaterialien in Form einer heterogenen Fest-Flüssig-Reaktion statt, wobei eine CO-Atmosphäre oder eine inerte Atmosphäre aufrechterhalten werden muß. Anschließend wird das so erhaltene Material in bekannter Weise getrocknet und kalziniert. Durch die spezielle Art der Herstellung dieses katalytischen Systems soll die Neigung zur Verkokung wesentlich reduziert werden.

Aufgabe der Erfindung ist es, einen Katalysator zur Herstellung von Synthesegas zu finden, der nicht nur ausreichend aktiv ist, um eine hohe Ausbeute an CO und $H_2$ zu erzielen, sondern der insbesondere über ausreichend lange Zeiten unzulässig starke Verkokungen-vermeidet, also lange genug aktiv bleibt, auch wenn die Einsatzmengen an $CO_2$ und $CH_4$ relativ nahe an den stöchiometrischen Werten liegen, das Verhältnis $CO_2/CH_4$ (Molgewichte) also etwa 1 beträgt. Auf den Einsatz von Wasserdampf während der Reaktion soll möglichst verzichtet werden können.

Gelöst wird diese Rufgabe erfindungsgemäß mit den Merkmalen des Patentanspruchs 1. Vorteilhafte Weiterbildungen der Erfindung sind in den Unteransprüchen 2 bis 7 angegeben.

In Versuchen zeigte ein Katalysator aus Ni (5 Gewichts-%), das auf einen $\gamma$-$Al_2O_3$-Trägerwerkstoff aufgebracht war, eine sehr gute Katalysatorwirkung, die zu Konversionsraten in der Nähe der thermodynamischen Gleichgewichtswerte bei der jeweiligen Temperatur führte. Bei z.B. 500°C Reaktionstemperatur wurde der Katalysator jedoch innerhalb kürzester Zeit durch Verkokung deaktiviert. Dagegen zeigte ein entsprechender Ni-Katalysator auf der Basis von $\gamma$-$Al_2O_3$ zwar keine nennenswerte Verkokung, war jedoch wesentlich weniger wirksam, da er nur Konversionsraten im Bereich von 20 % der dem thermodynamischen Gleichgewicht entsprechenden Beträge bei der jeweiligen Temperatur zuließ. Wiederum gute Ergebnisse hinsichtlich seiner Aktivität erbrachte ein Katalysator aus Pt (2 Gewichts-%), der ebenfalls auf einer $Al_2O_3$-Matrix aufgebracht war. Die Konversionsrate für $CH_4$ war mit 90 % bei einer Reaktionstemperatur von 650°C zwar sehr hoch (in der Literatur wird eine Konversionsrate von 100 % für eine Temperatur von 850°C angegeben (vgl. A.T. Ashcroft, A.K. Cheetham, M.L.H. Green, P.D.F. Vernon, Partial oxidation of methane to synthesis gas using carbon dioxide, Nature, Vol.352, 18. Juli 1991), jedoch mußte bereits nach nur 8 Stunden Einsatzzeit eine Deaktivierung des Katalysators festgestellt werden. Entsprechendes gilt auch für Katalysatoren auf der Basis eines $SiO_2$-Matrixwerkstoffs.

Es war daher völlig überraschend, daß in Versuchen die hervorragende Eignung insbesondere von Ni- und Pt-Katalysatoren auf der Basis eines thermisch stabilisierten $ZrO_2$-Matrixwerkstoffs festgestellt werden konnte. Diese Katalysatoren konnten nicht nur zufriedenstellende Aktivitätswerte liefern, sondern zeichneten sich gleichzeitig auch durch eine Langzeitbeständigkeit gegen Deaktivierung durch Verkokung aus, ohne daß der Einsatz von Wasserdampf notwendig war. So ermöglichte ein 5%Ni/$ZrO_2$-Katalysator eine $CH_4$-Konversionsrate von etwa 50 % der thermodynamischen Gleichgewichtswerte bei der jeweiligen Temperatur und zeigte zum Beispiel bei 500°C über längere Zeit keine nennenswerte Verkokung. Noch deutlich bessere, nämlich nahe an den thermodynamischen Gleichgewichtswerten liegende $CH_4$-Konversionsraten (bei 650°C beispielsweise 90 %) ergaben sich für einen 2%Pt/$ZrO_2$-Festbettkatalysator, wobei die $CO_2$-Konversionsrate 55 % und die Selektivität für CO 100 % betrug. Selbst nach 100 Betriebsstunden konnte noch keine sichtbare Verkokung festgestellt werden.

Die Erfindung hat gezeigt, daß insbesondere Pt- und Ni-Katalysatoren auf einem überwiegend aus $ZrO_2$ bestehenden thermisch stabilisierten Trägerwerkstoff (mindestens 80 Gew.-%, vorzugsweise 90 Gew.-%) nicht nur gute Aktivitätswerte liefern, sondern gleichzeitig auch eine ausgezeichnete Beständigkeit gegenüber einer Deaktivierung durch Verkokung zeigen. Der Gewichtsanteil der Beschichtung kann auf max. 7 % begrenzt werden. Bei Pt-Katalysatoren sollte die Beschichtung einen Gewichtsanteil von 0,1 - 5 %, vorzugsweise von 0,1 - 2,0 % ausmachen. Für Ni-Katalysatoren liegt der Gewichtsanteil vorzugsweise bei 0,5 - 5,0 %. Es können auch mehrere Katalysatorwerkstoffe (auch andere Elemente der Gruppe VIII des Periodensystems, z.B. Pd, Co) auf den Trägerwerkstoff aufgebracht sein. Besonders geeignet sind beispielsweise 0,1 - 2,0 Gew.-% Pt in Verbindung mit 2 - 5 Gew.-% Ni. Auch eine Kombination von Pt und Pd ist vorteilhaft.

Von entscheidender Bedeutung für die Erfindung ist die Verwendung eines Trägermaterials, das weitaus überwiegend aus $ZrO_2$ besteht. Chemisch reines $ZrO_2$ zeigt bei Temperaturen über 600°C jedoch eine unerwünschte starke Neigung zum Sintern. Das Trägermaterial wird daher durch Zumischung von 0,5 - 10 mol-% an Begleitstoffen in Form eines oder mehrerer Oxide der Elemente Y, La, Ce, Si, Ca oder Al thermisch stabilisiert, d.h. seine Sinterneigung ist bei den vorgesehenen Einsatztemperaturen abgebaut. Überraschenderweise wird durch die Anwesenheit von Y, La oder Ce im Trägerwerkstoff auch die Wirksamkeit des Katalysators sogar noch verbessert.

Die Herstellung des Katalysators erfolgt in der Weise, daß das $ZrO_2$ zunächst bei maximal 670°C kalziniert und mit dem thermischen Stabilisator (z.B. $Y_2O_3$) vermischt wird, um das Trägermaterial zu erhalten. Die Aufbringung des katalytisch wirksamen Beschichtungsstoffs wird auf rein physikalischem Wege nach der bekannten Trockenimprägniermethode oder der Naßimprägniermethode durchgeführt. Dabei findet eine Adsorption des als komplexe Verbindung in einem Lösungsmittel vorliegenden Beschichtungsstoffs auf dem Trägerwerkstoff statt. Anschließend wird das Lösungsmittel verdunstet (z.B. durch thermische Trocknung bei Unterdruck). Das so erhaltene Katalysatormaterial wird danach bei maximal 650°C erneut kalziniert.

Die Herstellung von CO/$H_2$-Synthesegas unter Verwendung eines Katalysators erfolgt bei Temperaturen von 400 - 900°C, vorzugsweise bei 700 - 900 °C. Der Druck bei der Reaktion kann 1 - 30 bar betragen und liegt vorzugsweise bei 10 - 20 bar. Die Einsatzmengen an $CO_2$ und $CH_4$ sollten so aufeinander abgestimmt sein, daß das Molgewichtsverhältnis $CO_2$/$CH_4$ zwischen 0,5 und 4 liegt, wobei der Bereich 0,5 bis 1,5 und insbesondere der Wert 1 als besonders bevorzugt anzusehen sind. Der Einsatz von Wasserdampf zur Verminderung der Verkokungsneigung ist nicht erforderlich.

Anhand der nachfolgenden Ausführungsbeispiele wird die Erfindung näher erläutert. Darin wird als Wirksamkeitskriterien auf die Konversionsraten für $CO_2$ und $CH_4$ sowie den CO-Ertrag und die CO-Selektivität Bezug genommen. Diese Größen sind wie folgt definiert:

$$CO_2\text{-Konversionsrate} = \left( 1 - \frac{mol\ CO_2\ im\ Produkt}{mol\ CO_2\ im\ Einsatzmaterial} \right) \times 100\ \%$$

$$CH_4\text{-Konversionsrate} = \left( 1 - \frac{mol\ CH_4\ im\ Produkt}{mol\ CH_4\ im\ Einsatzmaterial} \right) \times 100\ \%$$

$$CO\text{-Selektivität} = \frac{mol\ CO\ im\ produkt}{mol\ aller\ C\text{-haltigen Anteile im Produkt}} \times 100\ \%$$

$$\text{CO-Ertrag} = \left(1 - \frac{\text{mol } CH_4 + \text{mol } CO_2 \text{ im Produkt}}{\text{mol } CH_4 + \text{mol } CO_2 \text{ im Einsatzmat.}}\right) \times \text{CO-Selektivität \%}$$

Vorab sei darauf hingewiesen, daß in den nachfolgenden Meßergebnissen sich die Konversionsraten für $CO_2$ und $CH_4$ unter den verschiedenen Bedingungen nicht wie 1 : 1 verhalten, wie dies rein rechnerisch aufgrund der $CO_2$/$CH_4$-Reaktionsgleichung zu erwarten wäre. Dies liegt daran, daß zusätzlich auch folgende Nebenreaktion abläuft, die zwar nicht zu einer Verkokungserscheinung führt, aber den Anteil des umgewandelten $CO_2$ zugunsten des CO erhöht:

$$CO_2 + H_2 \rightarrow CO + H_2O$$

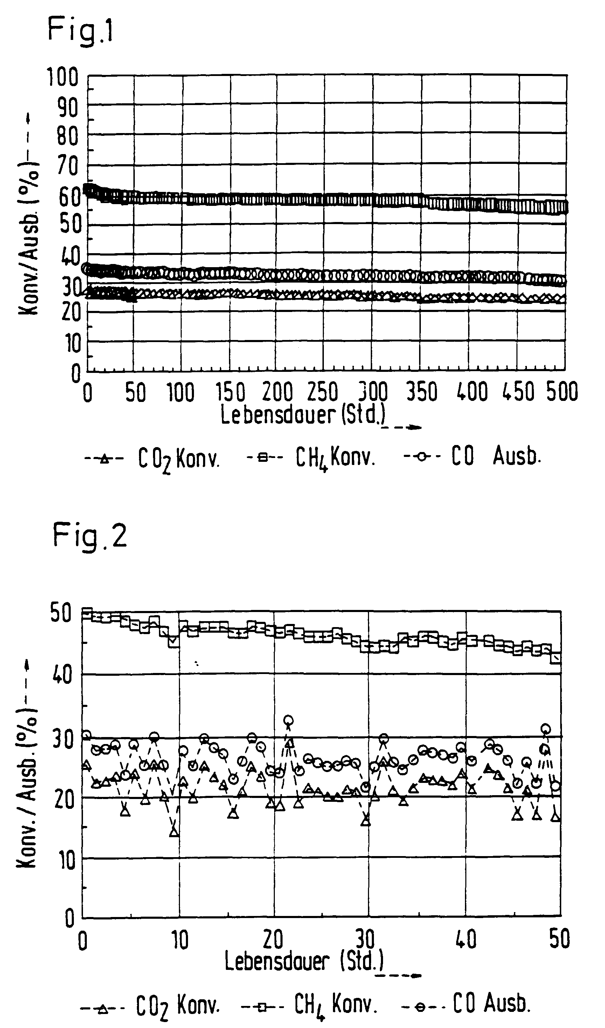

Die Figuren 1 bis 6 zeigen in graphischer Darstellung jeweils Konversionsraten für $CO_2$ und $CH_4$ sowie den CO-Ertrag bei unterschiedlichen Versuchsbedingungen.

Beispiel 1

Es wurde nach der Naßimprägniermethode (incipient wetness method) ein Katalysator hergestellt. Hierzu wurden 5 g monoklines $ZrO_2$ bei 650°C 15 Std. lang an Luft kalziniert, thermisch stabilisiert, zu Pellets verpreßt und anschließend zu Körnern mit einer Korngröße von 0,3 - 0,6 mm zerkleinert. Dieses Material hatte eine BET-Oberfläche von 33 $m^2$/g und ein Porenvolumen von 0,17 $cm^3$/g. Das Material wurde danach mit 5 $cm^3$ einer wässrigen $H_2PtCl_4$ x $H_2O$-Lösung (0,02 g Pt/$cm^3$) in einem Rotationsverdampfer bei 60°C behandelt. Anschließend wurde der Katalysator bei 110°C 4 Std. lang getrocknet und dann noch 15 Std. Lang bei 650°C kalziniert.

In einer Versuchsreihe wurden 300 mg (0,8 $cm^3$) dieses körnigen Katalysators bei einem Einsatzgasdurchfluß von 170 $cm^3$/min. im Temperaturbereich von etwa 400 - 620°C untersucht. Das Einsatzgas hatte ein $CH_4$/$CO_2$-Verhältnis von 1 : 3,9 und durchströmte den Festbettkatalysator von unten nach oben. Die Zusammensetzung des erhaltenen Produktes wurde ebenso wie in den nachfolgenden Beispielen in einem Gaschromatographen mit Aktivkohlekolonne untersucht. Dies erbrachte die in Tabelle 1 aufgeführten Meßwerte. Oberhalb von 560°C ergeben sich sehr gute Konversionsraten für $CH_4$. Bemerkenswert ist, daß die Selektivität für CO dabei praktisch

## Tabelle 1

EP 0 695 279 B1

| Temperatur °C | 398 | 432 | 473 | 492 | 511 | 529 | 546 | 565 | 611 | 620 |
|---|---|---|---|---|---|---|---|---|---|---|
| CO$_2$ Conv. (%) | 2.07 | 3.71 | 7.55 | 9.21 | 11.33 | 14.36 | 17.56 | 20.29 | 27.76 | 29.64 |
| CH$_4$ Conv. (%) | 3.11 | 5.67 | 13.98 | 18.54 | 23.27 | 29.04 | 35.90 | 42.74 | 61.65 | 66.70 |
| CO (%) | 2.28 | 4.11 | 8.87 | 11.59 | 13.78 | 17.34 | 21.30 | 24.87 | 34.68 | 37.36 |

100 % betrug. Dieser Effekt zeigt sich indirekt auch in der Darstellung der Figur 1, die für die Temperatur 611°C die Entwicklung der Konversionsraten für $CO_2$ und $CH_4$ sowie den CO-Ertrag über einen längeren Zeitraum wiedergibt. Es ist deutlich erkennbar, daß die Wirksamkeit des Katalysators selbst nach 500 Betriebsstunden noch auf einem sehr hohen Wert liegt. Beispielsweise nimmt die Konversionsrate für $CH_4$ lediglich von etwa 62 % am Anfang auf etwa 57 % ab. Das bedeutet, daß die Verkokung äußerst gering geblieben ist.

Beispiel 2

In gleicher Weise wie im Beispiel 1 wurde ein Pt-Katalysator hergestellt, der als Trägermaterial $ZrO_2$-$Y_2O_3$ aufwies, wobei das $ZrO_2$ 3 mol% $Y_2O_3$ enthielt. Dieser Katalysator wurde wiederum unter gleichartigen Bedingungen wie im Beispiel 1 getestet und erbrachte die in Tabelle 2 wiedergegebenen Ergebnisse. Insbesondere bei Temperaturen über 560°C ergaben sich hierbei in bezug auf die $CO_2$-Konversionsrate und den CO-Ertrag sogar noch etwas bessere Werte als im ersten Beispiel.

## Tabelle 2

| Temperatur °C | 408 | 444 | 470 | 498 | 524 | 553 | 572 | 596 |
|---|---|---|---|---|---|---|---|---|
| $CO_2$ Conv. (%) | 4.05 | 4.36 | 6.27 | 7.80 | 11.89 | 17.92 | 23.04 | 28.50 |
| $CH_4$ Conv. (%) | 6.65 | 7.38 | 9.30 | 17.49 | 23.05 | 30.04 | 39.16 | 49.14 |
| CO (%) | 4.67 | 5.54 | 6.53 | 10.12 | 14.56 | 20.82 | 26.90 | 33.44 |

Beispiel 3

In gleicher Weise wie im Beispiel 1 wurde in Pt-Katalysator hergestellt, der als Trägermaterial $ZrO_2$-$La_2O_3$ aufwies,

wobei das $ZrO_2$ 3 mol% $La_2O_3$ enthielt. Dieser Katalysatur wurde wiederum unter gleichartigen Bedingungen wie im Beispiel 1 getestet und erbrachte die in Tabelle 3 wiedergegebenen Ergebnisse. Dieser Katalysator lieferte in allen Temperaturbereichen und im Hinblick sowohl auf die $CO_2$-konversionsräte als auch auf die $CH_4$-Konversionsrate und den CO-Ertrag noch deutlich bessere Werte als der Katalysator im ersten Beispiel.

Beispiel 4

In einem weiteren Versuch wurden die Bedingungen des ersten Beispiels dahingehend abgewandelt, daß das Einsatzmaterial ein $CH_4/CO_2$-Verhältnis von 1 : 2,16 aufwies. Da hierbei der $CH_4$-Anteil im Einsatzmaterial größer war, mußte dies zwangsläufig zu einer entsprechenden Verminderung der $CH_4$-Konversionsrate führen. Entscheidend ist jedoch, daß die $CO_2$-Konversionsrate und auch der CO-Ertrag über den gesamten

EP 0 695 279 B1

## Tabelle 3

| Temperatur °C | 402 | 402 | 440 | 475 | 506 | 525 | 562 | 590 | 613 |
|---|---|---|---|---|---|---|---|---|---|
| $CO_2$ Conv. (%) | 5.18 | 4.23 | 9.85 | 15.59 | 19.78 | 25.23 | 30.52 | 36.53 | 40.49 |
| $CH_4$ Conv. (%) | 7.19 | 8.14 | 13.71 | 22.27 | 31.05 | 40.91 | 51.32 | 62.91 | 70.34 |
| CO    (%) | 5.65 | 5.13 | 10.74 | 17.14 | 22.39 | 28.86 | 35.33 | 42.64 | 47.40 |

Temperaturbereich deutlich über den entsprechenden Werten des Beispiels 1 liegen, wie die Meßwerte der Tabelle 4 zeigen.

Beispiel 5

Aus Tabelle 5 gehen die Versuchsergebnisse hervor, die für den Katalysator aus dem Beispiel 1 ermittelt wurden für ein Einsatzmaterial mit einem $CH_4/CO_2$-Verhältnis von 1 : 1,09, das praktisch dem

## Tabelle 4

| Temperatur °C | 399 | 432 | 473 | 491 | 506 | 529 | 547 | 561 |
|---|---|---|---|---|---|---|---|---|
| $CO_2$ Conv. (%) | 2.53 | 5.80 | 9.22 | 11.78 | 14.47 | 17.76 | 20.54 | 23.68 |
| $CH_4$ Conv. (%) | 2.37 | 5.87 | 10.23 | 13.34 | 16.67 | 20.93 | 25.41 | 29.36 |
| CO (%) | 2.48 | 5.83 | 9.54 | 12.28 | 15.18 | 18.77 | 22.09 | 25.64 |

EP 0 695 279 B1

## Tabelle 5

| Temperatur °C | 397 | 432 | 467 | 488 | 503 | 520 | 538 | 555 | 596 |
|---|---|---|---|---|---|---|---|---|---|
| $CO_2$ Conv. (%) | 3.67 | 6.45 | 13.23 | 16.65 | 19.78 | 22.39 | 27.54 | 31.84 | 45.8 |
| $CH_4$ Conv. (%) | 1.79 | 3.23 | 7.97 | 10.41 | 12.74 | 14.80 | 18.68 | 22.19 | 34.7 |
| CO (%) | 2.77 | 4.90 | 10.71 | 13.66 | 16.41 | 18.75 | 23.29 | 27.21 | 40.5 |

EP 0 695 279 B1

stöchiometrischen Verhältnis entspricht. Die Werte der $CH_4$-Konversionsrate und des CO-Ertrags liegen nochmals besser als im Beispiel 4.

Beispiel 6

Es wurde nach der Trockenimprägniermethode (dry impregnation method) ein anderer Katalysator hergestellt. Hierzu wurden 4 g monoklines $ZrO_2$ bei 650°C 15 Std. lang an Luft kalziniert, thermisch stabilisiert, zu Pellets verpreßt und anschließend zu Körnern mit einer Korngröße von 0,3 - 0,6 mm zerkleinert. Dieses Material hatte eine BET-Oberfläche von 33 $m^2$/g und ein Porenvolumen von 0,17 $cm^3$/g. Das Material wurde danach mit 1,74 $cm^3$ einer wässrigen $Ni(NO_3)_2$ x $H_2O$-Lösung (2 mol/$dm^3$) in einem Rotationsverdampfer bei 60°C behandelt. Anschließend wurde der Katalysator bei 120°C 4 Std. lang getrocknet und dann noch 19 Std. lang bei 650°C kalziniert.

Auf diese Weise wurde ein körniger 5 Gew-% Ni/$ZrO_2$-Katalysator erhalten, von dem 300 mg (0,8 $cm^3$) bei einem Einsatzgasdurchfluß von 170 $cm^3$/min im Temperaturbereich von etwa 400 - 620°C untersucht wurden. Das Einsatzgas hatte ein $CH_4$/$CO_2$-Verhältnis von 1 : 3,9 und durchströmte den Festbettkatalysator von unten nach oben. Die Zusammensetzung des erhaltenen Produktes wurde in einem Gaschromatographen mit Aktivkohlekolonne untersucht. Dies erbrachte die in Tabelle 6 aufgeführten Meßwerte. Bis zu Temperaturen im Bereich von etwa 540 - 550°C ist dieser Katalysator, wie ein Vergleich mit Tabelle 1 zeigt in seiner Wirksamkeit dem des ersten Beispiels sogar leicht überlegen. Bei höheren Temperaturen kehren sich die Verhältnisse jedoch um. Ein Lebensdauertest zeigte unter den vorstehend genannten Bedingungen bei einer Versuchstemperatur von 601°C das in Figur 2 dargestellte Ergebnis. Die erreichten Konversionsraten für $CO_2$ und $CH_4$ sowie der CO-Ertrag nahmen zwar mit zunehmender Einsatzdauer ab, zeigten aber auch nach 50 Betriebsstunden noch sehr hohe Werte. Das bedeutet, daß auch hierbei keine substantielle Verkokung festzustellen war und die Selektivität für CO bei nahezu 100 % lag.

Beispiel 7

Der Katalysator gemäß Beispiel 6 wurde auch unter der Bedingung untersucht, daß das $CH_4$/$CO_2$-Verhältnis im Einsatzgas 1 : 1,09 betrug. Dabei zeigte der Katalysator, wie aus Tabelle 7 entnehmbar ist, im

## Tabelle 6

| Temperatur °C | 400 | 433 | 475 | 493 | 513 | 531 | 554 | 574 | 616 |
|---|---|---|---|---|---|---|---|---|---|
| $CO_2$ Conv. (%) | 2.85 | 6.23 | 8.33 | 11.07 | 13.78 | 16.23 | 18.13 | 20.84 | 25.89 |
| $CH_4$ Conv. (%) | 7.55 | 11.23 | 17.84 | 22.84 | 27.68 | 32.46 | 37.20 | 43.44 | 58.12 |
| CO (%) | 3.84 | 7.25 | 10.27 | 13.48 | 16.63 | 19.55 | 22.03 | 25.46 | 32.47 |

**Tabelle 7**

| Temperatur °C | 399 | 420 | 438 | 459 |
|---|---|---|---|---|
| CO$_2$ Conv. (%) | 4.97 | 6.27 | 9.15 | 11.92 |
| CH$_4$ Conv. (%) | 3.21 | 4.19 | 6.41 | 9.09 |
| CO (%) | 4.13 | 5.27 | 7.84 | 10.51 |

Vergleich zu Tabelle 6 bis etwa 460°C bessere Ergebnisse als zuvor. Allerdings traten bei noch höheren Temperaturen störende Verkokungserscheinungen auf. Dieser Effekt konnte bei dem Pt-ZrO$_2$-Katalysator praktisch vollständig vermieden werden. Allerdings bleibt auch hierbei festzuhalten, daß trotz dieser feststellbaren Verkokung bei höheren Temperaturen ein Ni-ZrO$_2$-Katatysator immer noch ein erheblich besseres Stabititätsverhatten zeigt als beispielsweise ein Ni-Katalysator auf einem AlO$_3$-Trägermaterial, der noch deutlich schneller deaktiviert wird.

Vergleichsbeispiel 1

Ähnlich wie beim Beispiel 1 wurde ein herkömmlicher Pt-Katalysator hergestellt. Anstelle von ZrO$_2$ wurden 5 g -Al$_2$O$_3$ eingesetzt und in gleicher Weise zu einem körnigen Trägermaterial mit 0,3 - 0,6 mm Korngröße verarbeitet. Dieses Material hatte mit 103 m$^2$/g eine deutlich größere BET-Oberfläche und mit 0,04 cm$^3$/g ein wesentlich kleineres Porenvolumen. Die Katalysatorbeschichtung wurde genauso wie im Beispiel erzeugt und führte zu einem 1 Gew-% Pt/ -Al$_2$O$_3$-Katalysator. Unter wiederum gleichen Versuchsbedingungen wie im Beispiel 1 ergaben sich die in Tabelle 8 aufgeführten Meßwerte. Diese zeigen eine Wirksamkeit,

## Tabelle 8

| Temperatur °C | 400 | 421 | 445 | 465 | 489 | 512 | 533 | 555 |
|---|---|---|---|---|---|---|---|---|
| $CO_2$ Conv. (%) | 3.39 | 6.13 | 8.88 | 12.01 | 15.85 | 20.23 | 24.85 | 29.75 |
| $CH_4$ Conv. (%) | 7.39 | 10.13 | 14.63 | 20.56 | 28.17 | 36.95 | 46.53 | 57.09 |
| CO (%) | 4.17 | 6.91 | 10.00 | 13.68 | 18.25 | 23.49 | 29.08 | 35.08 |

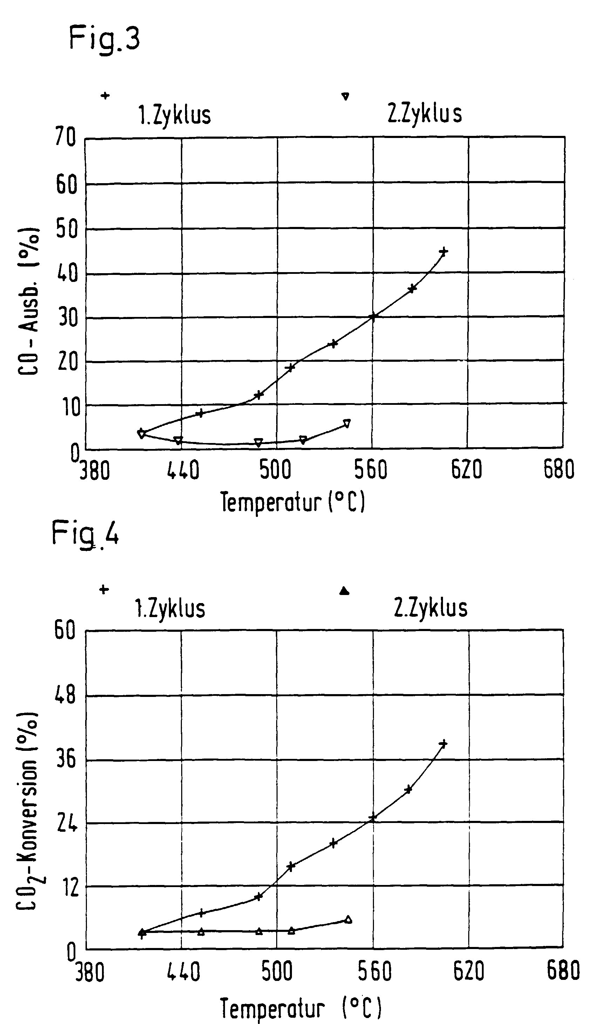

die zwar höher liegt als die aus Tabelle 1 hervorgehende des erfindungsgemäßen Beispiels 1. Entscheidend ist aber, daß dieser herkömmliche Katalysator innerhalb kürzester Zeit inaktiviert war durch Verkokung. Dies geht aus den Darstellungen der Figuren 3, 4 und 5 hervor, die die Konversionsraten für $CO_2$ und $CH_4$ bzw. den CO-Ertrag in Abhängigkeit von der Temperatur für einen ersten und lediglich einen zweiten Temperaturzyklus zeigen. Daraus ergibt sich, daß dieser Katalysator bereits nach Durchlaufen eines einzigen Temperaturzyklusses bis in den Temperaturbereich von etwa 600°C praktisch völlig deaktiviert, also unbrauchbar geworden ist.

Vergleichsbeispiel 2

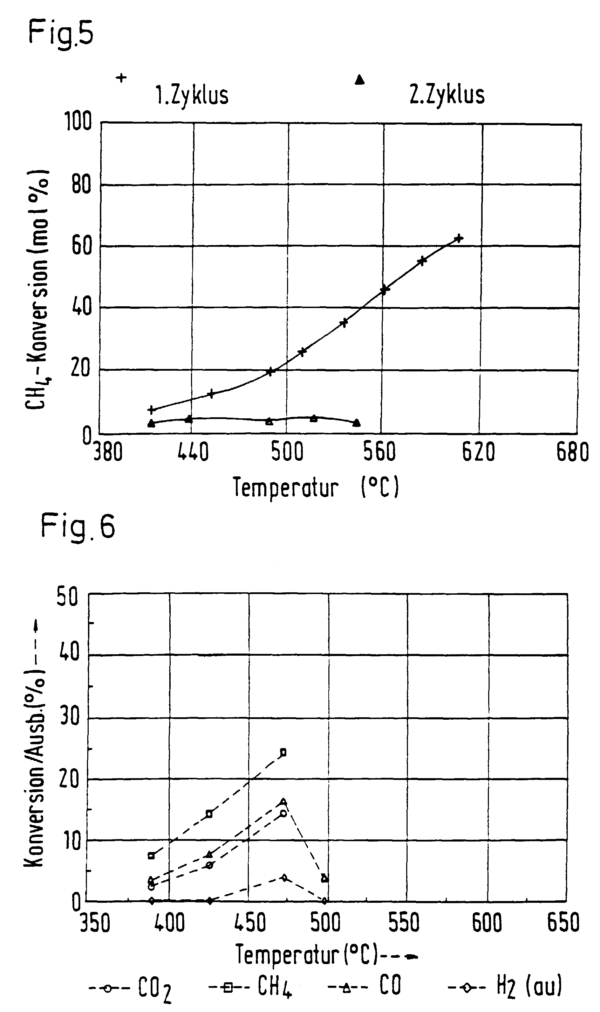

Es wurde zunächst in derselben Weise wie beim Vergleichsbeispiel 1 ein Trägermaterial aus 5 g $\gamma$-$Al_2O_3$ mit einer Korngröße von 0,3 - 0,6 mm hergestellt. Dieses Material wurde dann mit 10 cm$^3$ einer wässrigen Ni(NO$_3$) x 6H$_2$O-Lösung bei 60°C in einem Rotationsverdampfer behandelt, um einen 10 Gew-% Ni/$\gamma$-$Al_2O_3$-Katalysator zu erhalten. Nach der Imprägnierung wurde der Katalysator wie im Beispiel 1 4 Std. Lang bei 110°C getrocknet und anschließend 15 Std. lang bei 650°C kalziniert. Aus Figur 6 gehen die Ergebnisse für die $CO_2$-, die $CH_4$-Konversionsrate und den CO-Ertrag für den ersten Temperaturzyklus hervor. Bei Temperaturen von etwa 500°C zeigte sich bereits in diesem ersten Zyklus eine drastisch in Erscheinung tretende Deaktivierung, so daß ein solcher Ni-Katalysator für den praktischen Betrieb nicht brauchbar ist.

**Patentansprüche**

1. Verwendung eines Katalysators zur Herstellung von Synthesegas (CO und $H_2$) durch Reaktion von $CO_2$ und $CH_4$ und/oder anderen leichten Kohlenwasserstoffen, wobei der Katalysator aus einem oxidischen Trägerwerkstoff und einer 0,1 - 7 Gew-% ausmachenden Beschichtung aus mindestens einem der Metalle Pt, Ni, Pd, Co besteht, mit der Maßgabe,

   - daß der Trägerwerkstoff zu mindestens 80 Gew-%, vorzugsweise mindestens 90 Gew-% aus $ZrO_2$ besteht, welches vor dem Aufbringen der Beschichtung bei maximal 670 °C kalziniert wurde,

   - daß der Trägerwerkstoff thermisch stabilisiert wurde durch Zumischung eines Anteils in Höhe von 0,5-10 mol-% an einem oder mehreren Oxiden aus der Gruppe Y, La, Al, Ca, Ce und Si und

   - daß die Aufbringung der Beschichtung nach der an sich bekannten Trockenimprägniermethode oder Naßimprägniermethode auf rein physikalischem Weg erfolgte durch Adsorption des als komplexe Verbindung in einem Lösungsmittel vorliegenden Beschichtungsstoffs und anschließende Verdunstung des Lösungsmittels, wobei das so erhaltene Material abschließend bei maximal 650 °C kalziniert wurde.

2. Verwendung eines Katalysators nach Anspruch 1,
   dadurch gekennzeichnet,
   daß die Beschichtung aus Pt besteht und 0,1 - 5 Gewichts-% des fertigen Katalysators ausmacht.

3. Verwendung eines Katalysators nach Anspruch 2,
   dadurch gekennzeichnet,
   daß die Beschichtung 0,1 - 2 Gewichts-% ausmacht.

4. Verwendung eines Katalysators nach Anspruch 1,
   dadurch gekennzeichnet,
   daß die Beschichtung aus Ni besteht und 0,5 - 5 Gewichts-% ausmacht.

5. Verwendung eines Katalysators nach Anspruch 1,
   dadurch gekennzeichnet,
   daß die Beschichtung mindestens aus Pt und Ni besteht.

6. Verwendung eines Katalysators nach Anspruch 5,
   dadurch gekennzeichnet,
   daß die Menge an Pt 0,1 - 2 Gew-% und die Menge an Ni 2 - 5 Gew-% ausmacht.

7. Verwendung eines Katalysators nach Anspruch 1,
   dadurch gekennzeichnet,
   daß die Beschichtung mindestens aus Pt und Pd besteht.

## Claims

1. The use of a catalyst for the production of synthesis gas (CO and $H_2$) through reaction of $CO_2$ and $CH_4$ and/or other light hydrocarbons, in which the catalyst consists of an oxidic carrier material and of a coating of at least one of the metals Pt, Ni, Pd, Co amounting 0.1 - 7 % by weight, under the condition that

   - the carrier material consists by at least 80% by weight, preferably at least 90% by weight of $ZrO_2$, which was calcined before the application of the coating at a maximum of 670° C,

   - the carrier material was thermally stabilised by the admixing of a component at the level of 0.5-10 mol-% to one or more oxides from the group Y, La, Al, Ca, Ce and Si and

   - the application of the coating took place according to the dry impregnating method known per se or wet impregnating method in a purely physical manner through adsorption of the coating matieral, present as a complex compound in a solvent, and subsequent evaporation of the solvent, in which the material thus obtained was finally calcined at a maximum of 650° C.

2. The use of a catalyst according to Claim 1,
   characterised in that
   the coating consists of Pt and amounts to 0.1 - 5 % by weight of the finished catalyst.

3. The use of a catalyst according to Claim 2,
   characterised in that
   the coating amounts to 0.1 - 2 % by weight.

4. The use of a catalyst according to Claim 1,
   characterised in that
   the coating consists of Ni and amounts to 0.5 - 5 % by weight.

5. The use of a catalyst according to Claim 1,
   characterised in that
   the coating consists at least of Pt and Ni.

6. The use of a catalyst according to Claim 5,
   characterised in that
   the quantity of Pt amounts to 0.1 - 2 % by weight and the quantity of Ni amounts to 2 - 5 % by weight.

7. The use of a catalyst according to Claim 1,
   characterised in that
   the coating consists at least of Pt and Pd.


## Revendications

1. Utilisation d'un catalyseur pour fabriquer du gaz de synthèse (CO et $H_2$) par réaction de $CO_2$ et $CH_4$ et/ou d'autres hydrocarbures légers, le catalyseur étant constitué d'une matière de support obtenue par oxydation et d'un revêtement, constituant 0,1-7 % en poids, d'au moins un des métaux Pt, Ni, Pd, Co, avec la caractéristique que :

   - la matière de support est constituée d'au moins 80 % en poids, avantageusement d'au moins 90 % en poids, de $ZrO_2$, lequel a été calciné à une température maximale de 670°C avant l'application du revêtement,
   - la matière de support a été stabilisée thermiquement par mélange d'une portion de 0,5-10 % molaire d'un ou plusieurs oxydes du groupe Y, La, Al, Ca, Ce et Si, et
   - l'application du revêtement selon le procédé d'imprégnation humide ou le procédé d'imprégnation sec connu en soi par une voie purement physique, a eu lieu par adsorption de la matière de revêtement présente dans un solvant comme composé complexe et évaporation suivante du solvant, la matière ainsi obtenue ayant été enfin calcinée à une température maximale de 650°C.

2. Utilisation d'un catalyseur selon la revendication 1, caractérisée en ce que le revêtement est constitué de Pt et s'élève à 0,1-5 % en poids du catalyseur préparé.

3. Utilisation d'un catalyseur selon la revendication 2, caractérisée en ce que le revêtement s'élève à 0,1-2 % en poids.

4. Utilisation d'un catalyseur selon la revendication 1, caractérisée en ce que le revêtement est constitué de Ni et s'élève à 0,5-5 % en poids.

5. Utilisation d'un catalyseur selon la revendication 1, caractérisée en ce que le revêtement est constitué au moins de Pt et Ni.

6. Utilisation d'un catalyseur selon la revendication 5, caractérisée en ce que la quantité de Pt s'élève à 0,1-2 % en poids et la quantité de Ni à 2-5 % en poids.

7. Utilisation d'un catalyseur selon la revendication 1, caractérisée en ce que le revêtement est constitué au moins de Pt et Pd.

## Fig.1

## Fig.2

## Fig.3

## Fig.4

## Fig.5

## Fig.6